# EUROPÄISCHE PATENTSCHRIFT

(11) **EP 3 043 222 B1**
(45) Veröffentlichungstag und Bekanntmachung des Hinweises auf die Patenterteilung: **23.01.2019**
(21) Anmeldenummer: 16158110.3
(22) Anmeldetag: 04.04.2013
(51) Int. Cl.: G05B 19/05, G07C 3/08

(54) **ANALYSESYSTEM ZUM VERMESSEN UND ANALYSIEREN VON INDUSTRIEMASCHINEN ODER -ANLAGEN**
ANALYSIS SYSTEM FOR MEASURING AND ANALYZING INDUSTRIAL MACHINERY OR INSTALLATIONS
SYSTEME D'ANALYSE DESTINÉ À MESURER ET ANALYSER DES MACHINES OU INSTALLATIONS INDUSTRIELLES

(30) Priorität: 08.06.2012 DE 102012011405
(43) Veröffentlichungstag der Anmeldung: 13.07.2016
(62) Teilanmeldung aus: 13001717.1
(73) Patentinhaber: Robert Bosch GmbH, 70442 Stuttgart (DE)
(72) Erfinder: Toloczyki, Johannes, 97857 Urspringen (DE)
(74) Vertreter: Thürer, Andreas

(56) Entgegenhaltungen:
- DE-A1-102009 017 959
- US-A1- 2012 078 670
- US-A1- 2012 084 431

## Beschreibung

Die vorliegende Erfindung betrifft ein Analysesystem zum Vermessen und Analysieren von Industriemaschinen oder-anlagen.

### Stand der Technik

Gesetzliche und unternehmerische Anforderungen an die Effizienz und Umweltverträglichkeit von Industriemaschinen oder -anlagen haben in der Vergangenheit zu einem erhöhten Bedarf an Maschinenanalysen geführt. Insbesondere werden Energieverbrauch und -effizienz ganzer Anlagen ebenso wie einzelner Maschinenteile geprüft und ausgewertet, um Energiesparhebel zu erkennen. Dazu können Prozesswerte wie elektrische Leistung, Druck oder Durchfluss einer Maschinenkomponente gemessen, visualisiert und interpretiert werden. Basierend auf den Ergebnissen kann ein Anwender Maßnahmen ergreifen, beispielsweise Logik in einem Steuerungsprogramm generieren oder ändern. Die Druckschrift EP 1 640 826 B1 offenbart in diesem Zusammenhang eine visuelle Darstellung von Prozesswerten in der Automatisierungstechnik, aus der EP 1 865 421 A1 ist ein System zur Erstellung dynamischer Webseiten bekannt.
Die US 2012/0084431 A1 zeigt ein System zum Erzeugen logischer Profile für physikalische Geräte. Die DE 10 2009 017 959 A1 beschreibt eine Vorrichtung zur Beurteilung der Energieeffizienz einer Industrieanlage. Die US 2012/0078670 A1 zeigt eine Ausgabeeinheit für Operationsinformationen, wobei physikalische Größen erfasst werden, welche beim Ausführen eines Prozesses von Produktionsgeräten erzeugt oder verbraucht werden. Diese physikalischen Größen werden ausgewertet und Operationsinformationen werden bestimmt.

Nach der Messung eines Prozesswertes kann der entsprechende Wert beispielsweise zu anderen zuvor oder danach gemessenen Daten in eine Tabelle, insbesondere in ein Kalkulationsprogramm eingetragen werden. Mit Hilfe von Computerprogrammen können die erfassten Werte miteinander in Beziehung gesetzt und evaluiert werden.

Für die Erfassung und Auswertung von Korrelationen zwischen den maschinenrelevanten physikalischen Größen sind jedoch verschiedene manuelle Schritte erforderlich. So muss jedes Messgerät separat angesteuert werden, und die einzelnen gemessenen Werte müssen zusammengetragen und einem Computerprogramm zur Auswertung zugänglich gemacht werden.

Die vorliegende Erfindung hat die Aufgabe, die Möglichkeiten für eine automatische Analysierbarkeit von Maschinen und Maschinenanlagen im Hinblick auf zeitliche und/oder hierarchische Korrelationen von Maschinenelementen zu verbessern.

### Offenbarung der Erfindung

Erfindungsgemäß wird ein Analysesystem zum Vermessen und Analysieren von Industriemaschinen oder -anlagen mit einem Messgerät und einer Recheneinheit mit den Merkmalen des unabhängigen Patentanspruchs 1 vorgeschlagen. Vorteilhafte Ausgestaltungen sind Gegenstand der Unteransprüche sowie der nachfolgenden Beschreibung.

Das Messgerät zur Vermessung von Industriemaschinen oder -anlagen umfasst wenigstens ein Messmodul zum Messen mindestens einer ersten physikalischen Größe und wenigstens einen analogen Eingang zum Aufnehmen von Daten, insbesondere von Daten, die als Messwerte von einem externen Sensor erfasst wurden. Vorzugsweise ist das Messgerät dazu eingerichtet, gleichzeitig mit dem wenigstens einen Messmodul zu messen und Daten über den wenigstens einen analogen Eingang aufzunehmen.

Das Messgerät weist weiterhin mindestens eine speicherprogrammierbare Steuerung (SPS) auf, die eingerichtet ist, vom mindestens einen Messmodul gemessene Daten und gleichzeitig über den mindestens einen Eingang aufgenommene Daten zu sammeln. Diese speicherprogrammierbare Steuerung wird im Folgenden zur besseren Unterscheidbarkeit von ggf. anzuschließenden weiteren ("externen") Maschinensteuerungen auch als "interne" SPS bezeichnet.

Das wenigstens eine Messmodul kann beispielsweise ein Leistungsmesser zum Messen einer elektrischen Leistung einer Maschinenkomponente sein. Jedes Messmodul weist vorzugsweise jeweils mindestens einen Anschluss (der beispielsweise ein Stromeingang oder -ausgang sein kann) für eine Verbindung mit einer Maschinen- oder Anlagenkomponente auf.

Das Messgerät bietet den Vorteil, dass mehrere physikalische Größen (beispielsweise elektrische Verbräuche) parallel erfasst und die zugehörigen Daten als gemessene und als aufgenommene Daten über ein Feldbuskommunikationssystem übertragen werden können. Dadurch wird eine Voraussetzung für eine automatische Verknüpfung der Daten geschaffen. Nach Übertragung der Daten auf eine übergeordnete Recheneinheit (z.B. ein PC) können durch die Recheneinheit Analysealgorithmen angewandt werden. So kann das Erkennen von Korrelationen zwischen physikalischen Größen automatisiert und gegebenenfalls Maßnahmen zum Verbessern beispielsweise von Energiesparhebeln ergriffen werden. Insbesondere kann ein Verbessern der Energieeffizienz der Maschine oder Anlage erleichtert werden.

Ein Verfahren zum Vermessen und Analysieren von Maschinen oder Anlagen umfasst ein gleichzeitiges Messen von zwei oder mehr physikalischen Größen einer Maschine oder Anlage, wie z.B. einer elektrischen Leistung, eines Energieverbrauchs, eines Volumenstroms oder eines Drucks. Insbesondere eignet sich für das Messen das erfindungsgemäße Messgerät in seinen möglichen Ausführungsformen. Das Verfahren umfasst weiter ein Übertragen der Daten auf eine SPS, die die Daten sammelt. Ein Softwareprogramm, das beispielsweise von einer über ein Kommunikationssystem mit der SPS verbundenen Recheneinheit ausgeführt werden kann, greift auf die aufgezeichneten Daten zu und analysiert sie.

Das Verfahren erlaubt ein automatisiertes Analysieren von Daten, die aus dem Messen von mindestens zwei physikalischen Größen resultieren. Ein Softwareprogramm kann somit automatisch die Daten miteinander verknüpfen und beispielsweise visualisieren und/oder Korrelationen erfassen. Dadurch wird ein schnelles und effizientes Sammeln und Aufbereiten der Messdaten möglich.

Vorzugsweise ist die SPS des Messgeräts auf ein vorbestimmtes Analyseprogramm abgestimmt, indem sie eingerichtet ist, Datenformate der Sensorebene zu speichern und so zu konvertieren, dass das Analyseprogramm auf einer geeigneten Recheneinheit die Daten interpretieren kann. Für diese Abstimmung eignet sich beispielsweise ein geeignetes SPS/NC-Programm.

Erfindungsgemäß umfasst das Messgerät einen oder mehrere externe(n) Sensor(en), der bzw. die über den oder über mindestens einen der analogen Eingänge angeschlossen ist (sind). Jeder Sensor kann seinerseits ein Messmodul für eine physikalische Größe sein, beispielsweise für eine Größe, die eine hydraulische Kraft- oder Energieübertragung kennzeichnet. Messwerte des Sensors können über den jeweiligen analogen Eingang als Daten in das Messgerät eingespeist werden.
Vorzugsweise umfasst das Messgerät einen USB-Anschluss, über den insbesondere eine Recheneinheit angeschlossen werden kann, die ein geeignetes Analyseprogramm ausführen kann. Alternativ oder zusätzlich kann das Messgerät einen oder mehrere Anschlüsse für einen Feldbus umfassen, über den oder die eine Recheneinheit und/oder eine weitere (externe) Maschinensteuerung angeschlossen werden kann, und/oder über den/die ein oder mehrere weitere Messgeräte parallel geschaltet werden kann/können, beispielsweise mittels Ethernet; die letztere Möglichkeit erlaubt es, das Messgerät modular einzusetzen, also ggf. durch Kombination mehrerer Messgeräte eine Messanlage variabler Größe abhängig von der Anzahl zu messender physikalischer Größen und/oder der Anzahl untersuchter Maschinenkomponenten aufzubauen.
Der oder die Anschlüsse für einen Feldbus können beispielsweise einem Feldbus-Standard gemäß IEC 61158 entsprechen, z.B. Sercos III. Jeder Anschluss ermöglicht vorzugsweise, Daten von angeschlossenen Aktoren und/oder Sensoren und/oder von einem oder mehreren angeschlossenen externen Maschinensteuerung(en) zum Betrieb von Industriemaschinen (wie Werkzeugmaschinen, Transportsystemen, Druckmaschinen, Maschinen der Automatisierungstechnik usw.) in die (interne) SPS im Messgerät einzulesen.
Vorzugsweise umfasst die interne SPS einen OPC-Server (OPC: OLE for Process Control), der eine Kommunikation der internen SPS mit einer oder mehreren an das Messgerät angeschlossenen externen Geräten (beispielsweise einer externen SPS, einer Recheneinheit oder eines weiteren Messgeräts) ermöglicht. Der OPC-Server liegt dabei vorzugsweise als Software vor, die von der SPS ausgeführt wird.

Wenn eine (externe) Maschinensteuerung über einen Feldbus an das Messgerät angeschlossen ist, kann der OPC-Server beispielsweise Variablen der Maschinensteuerung (z.B. einer Ventilansteuerung) abfragen. Analog umfasst das Verfahren in einer vorteilhaften Ausführungsform einen Schritt des Umwandelns der Daten zur Übertragung in dem Bussystem.

Das Messgerät ist Teil des erfindungsgemäßen Analysesystems zum Vermessen und Analysieren von Maschinen oder Anlagen, das zudem eine Recheneinheit wie beispielsweise einen Computer umfasst, wobei die Recheneinheit eingerichtet ist, mit der (internen) SPS des Messgeräts zu kommunizieren. Vorzugsweise ist die Recheneinheit dabei eingerichtet, auf die von dem (den) Messmodul(en) gemessenen Daten und die über den mindestens einen analogen Eingang aufgenommenen Daten (also auf die von der SPS gesammelten Daten) zuzugreifen und sie zu analysieren. Die Recheneinheit des Analysesystems kann mit dem Messgerät beispielsweise über einen USB-Anschluss des Messgeräts oder über einen Anschluss für einen Feldbus verbunden sein. Für die Kommunikation der Recheneinheit mit der internen SPS (die drahtlos oder drahtgebunden erfolgen kann) können beispielsweise die Spezifikationen von Profibus, Ethernet oder Sercos III zugrunde gelegt sein.

Die Recheneinheit führt vorzugsweise ein Softwareprogramm aus, das auf die von der Steuerung aufgezeichneten Analysedaten zugreifen und sie mit Hilfe von Auswertealgorithmen analysieren kann. So können aus ausgewählten oder allen Messwerten der Messmodule und/oder externen Sensor(en) Korrelationen erkannt werden. Erfindungsgemäß werden im Zuge dieser Analyse ein Energiefluss oder mehrere Energieflüsse zwischen Komponenten ermittelt. Ein geeignetes Softwareprogramm ist beispielsweise die Software IndraMotion MTX EWB, die über ein speziell angepasstes SPS/NC Programm auf die Daten zugreifen kann.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnung ausführlich beschrieben.

### Figurenbeschreibung

- Figur 1: zeigt eine beispielshafte Ausführungsform eines Messgeräts.
- Figur 2: stellt eine Ausführungsform eines erfindungsgemäßen Analysesystems dar.
- Figur 3: zeigt beispielhaft Schritte des Verfahrens.

### Detaillierte Beschreibung der Zeichnung

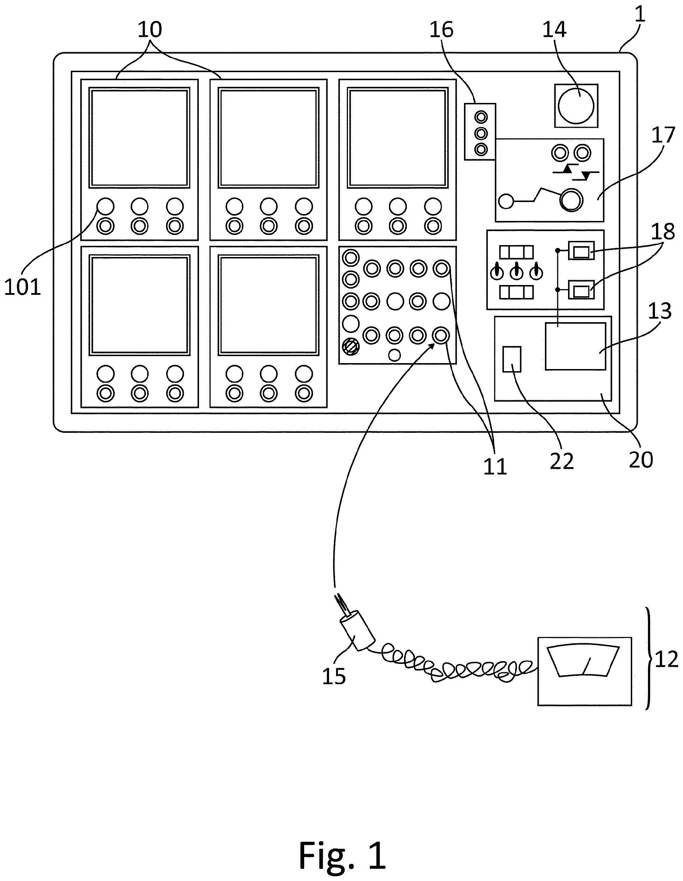

Das in Figur 1 gezeigte Messgerät 1 umfasst fünf Messmodule 10, die jeweils dreiphasige Leistungsmesser sind und jeweils über drei Stromeingänge 101 verfügen. Das Messgerät umfasst weiterhin Anschlüsse 11, über die jeweils ein externer Sensor angeschlossen werden kann. In der Figur 1 gezeigt ist beispielhaft ein Sensor 12, dessen Stecker 15 in einen Anschluss 11 gesteckt werden kann. Weiterhin weist das dargestellte Messgerät 1 eine speicherprogrammierbare Steuerung 20 auf, die einen OPC-Server 13 umfasst und in der Daten 22 gesammelt sind, die von einem oder mehreren Messmodulen 10 gemessen und über den mindestens einen Eingang 11 aufgenommen wurden.

Weiterhin umfasst das gezeigte Messgerät Anschlüsse 18 für einen Feldbus, wie z.B. SERCOS III oder Profibus. Wenn über diesen Anschluss 18 eine Verbindung zu einem externen Gerät (z.B. einer externen Maschinensteuerung, einem parallelgeschalteten weiteren Messgerät und/oder einer angeschlossenen Recheneinheit) hergestellt wurde, kann der OPC-Server 13 mit diesem Gerät kommunizieren, beispielsweise Parameter oder Variablen der Steuerung abfragen.

Eine Recheneinheit mit geeigneter Anaylsesoftware kann über einen USB-Anschluss 14 und/oder über einen Anschluss 18 an das Messgerät angeschlossen werden.

Schließlich umfasst das Messgerät 1 der Figur 1 eine Anzeige 16 für Betriebszustände und Trigger 17, mit denen ein Verwender das Messgerät starten oder stoppen kann. Ist an das Messgerät eine Recheneinheit mit einer geeigneten Analysesoftware angeschlossen, erfolgt die Bedienung des Messgeräts vorzugsweise über diese Software.

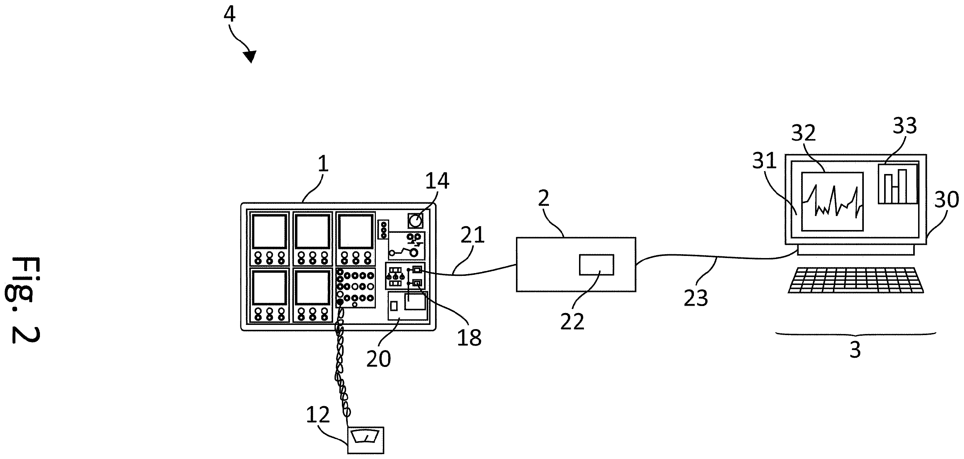

Figur 2 zeigt, wie das Messgerät 1 geeignet in ein Analysesystem 4 eingebettet werden kann: Das Messgerät ist dabei über den Feldbus 21 mit einer externen Maschinensteuerung 2 verbunden. Die Maschinensteuerung 2 ist dazu eingerichtet, auf Daten 22 des Messgeräts 1 zuzugreifen und diese aufzuzeichnen. Die Maschinensteuerung 2 ist über ein Kabel 23 mit einer Recheneinheit 3 verbunden und kommuniziert mit dieser vorzugsweise über Ethernet.

Der Anschluss der externen Maschinensteuerung 2 ist optional; alternativ kann die Recheneinheit auch direkt über einen der Anschlüsse 18 oder über den USB-Anschluss 14 an das Messgerät 1 angeschlossen werden.

Die gezeigte Recheneinheit 3 führt ein Softwareprogramm 31 aus, das auf die von der internen SPS 20 aufgezeichneten Daten 22 zugreift, die von den Leistungsmessern 10 und den Eingängen 11 geliefert werden. Darüber hinaus kann das Softwareprogramm auf die Daten 22 der externen Maschinensteuerung zugreifen.

Insbesondere kann die Auswertung dieser Daten ein Ermitteln von Energieflüssen, Energieverbräuchen und/ oder Datenkorrelationen umfassen. Die gezeigte Recheneinheit visualisiert erfasste Analysedaten und/oder aus diesen ermittelte Werte auf einem Bildschirm 30 in einem Oszillogramm 32 und einem Säulendiagramm 33. Diese Visualisierungen können es einem Betrachter ermöglichen, verbesserungsfähige Abläufe oder Zusammenhänge zu erkennen und geeignete Maßnahmen zu ergreifen.

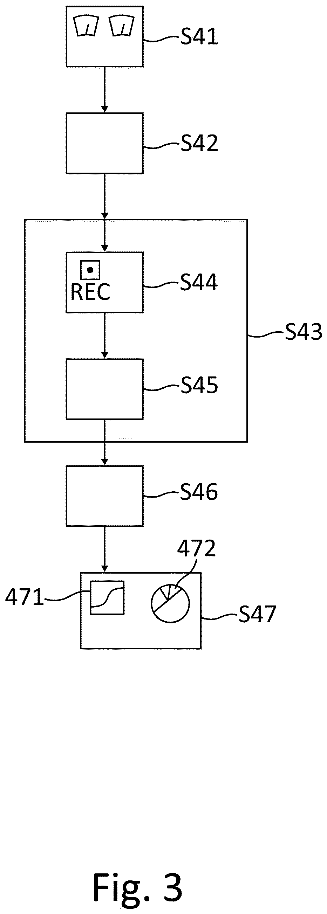

Figur 3 zeigt schematisch eine Abfolge von Verfahrensschritten entsprechend einer Ausführungsform der vorliegenden Erfindung. In einem Schritt S41 werden dabei zwei oder mehr physikalische Größen einer Maschine oder Anlage gemessen. Die durch die Messungen gelieferten Werte werden in einem Schritt S42 auf eine speicherprogrammierbare Steuerung 20 übertragen. Die speicherprogrammierbare Steuerung sammelt die Daten in einem Schritt S43, der einen Schritt S44 des Speicherns der Daten und einen Schritt S45 des Konvertierens zugehöriger Formate der Daten in für das Softwareprogramm interpretierbare Datenformate umfasst.

Ein Softwareprogramm, das vorzugsweise auf einer mit der integrierten SPS 20 über Ethernet kommunizierenden Recheneinheit 3 ausgeführt wird, greift in einem Schritt S46 auf die Daten zu und analysiert sie, beispielsweise um Energieverteilungen und/oder Wirkungsgrade von Aggregaten der Maschine oder Anlage zu erkennen. In einem Schritt S47 visualisiert das Softwareprogramm Analysedaten und/oder Ergebnisse der Analyse mit Funktionsgraphen 471 und einem Kreisdiagramm 472 auf einem Bildschirm oder Display. Dadurch wird einem Anwender die Möglichkeit gegeben, Zusammenhänge zu erkennen und geeignete Maßnahmen zu ergreifen.

## Patentansprüche

1. Analysesystem (4) zum Vermessen und Analysieren von Industriemaschinen oder - anlagen, das ein Messgerät (1) und eine Recheneinheit umfasst,
wobei das Messgerät (1) umfasst:
mindestens ein Messmodul (10), das dazu eingerichtet ist, mindestens eine erste physikalische Größe zu messen,
mindestens einen analogen Eingang (11), der dazu eingerichtet ist, Daten aufzunehmen;
mindestens einen Sensor (12) zum Messen mindestens einer zweiten physikalischen Größe, der am mindestens einen analogen Eingang (11) angeschlossen ist, wobei die aufgenommenen Daten Messwerte sind, die vom mindestens einen Sensor erfasst wurden.
und
eine speicherprogrammierbare Steuerung (20), die dazu eingerichtet ist, vom mindestens einen Messmodul (10) gemessene Daten und gleichzeitig über den mindestens einen analogen Eingang (11) aufgenommene Daten zu sammeln, wobei mindestens eine der ersten physikalischen Größe ein Energieverbrauch, ein Volumenstrom und/oder ein Druck einer Maschinenkomponente ist,
wobei die Recheneinheit (3) dazu eingerichtet ist, drahtlos oder drahtgebunden mit der speicherprogrammierbaren Steuerung (20) im Messgerät zu kommunizieren, um auf von der speicherprogrammierbaren Steuerung (20) aufgezeichnete gemessene und aufgenommene Daten (22) zuzugreifen und diese zu analysieren,
wobei im Zuge dieser Analyse ein Energiefluss oder mehrere Energieflüsse zwischen zwei oder mehr Komponenten der Maschine oder Anlage ermittelt werden.

2. Analysesystem (4) gemäß Anspruch 1, wobei mindestens eine der zweiten physikalischen Größe ein Energieverbrauch, ein Volumenstrom und/oder ein Druck einer Maschinenkomponente ist.

3. Analysesystem (4) gemäß einem der vorstehenden Ansprüche, wobei mindestens eine der ersten und/oder der zweiten physikalischen Größen eine elektrische Leistung, ein Strom und/oder eine Spannung einer Maschinenkomponente ist.

4. Analysesystem (4) gemäß einem der vorstehenden Ansprüche, wobei das Messgerät (1) mindestens einen Anschluss (18) für einen Feldbus (21) umfasst, über den eine externe Maschinensteuerung (2) angeschlossen oder über den ein weiteres Messgerät parallel geschaltet werden kann.

5. Analysesystem (4) gemäß Anspruch 4, wobei die speicherprogrammierbare Steuerung (20) einen OPC-Server (13) umfasst, der eine Kommunikation der speicherprogrammierbaren Steuerung (20) mit einer über den mindestens einen Anschluss (18) angeschlossenen externen Maschinensteuerung (2) oder mit einem über den mindestens einen Anschluss (18) parallel geschalteten weiteren Messgerät ermöglicht.

6. Analysesystem (4) gemäß Anspruch 5, wobei der OPC-Server (13) als Software vorliegt, die von der speicherprogrammierbaren Steuerung (20) ausgeführt wird.

7. Analysesystem (4) gemäß einem der vorstehenden Ansprüche, wobei das Messgerät (1) zwei oder mehr Trigger-Funktionen (17) und/oder eine Anzeige (16) für Betriebszustände und/oder einen USB-Anschluss (14) aufweist.

8. Analysesystem (4) gemäß einem der vorstehendend Ansprüche, das zudem eine über einen ersten Feldbus (21) angeschlossene externe Maschinensteuerung (2) umfasst, die dazu eingerichtet ist, die gemessenen Daten und die aufgenommenen Daten (22) aufzuzeichnen und/oder der Recheneinheit (3) einen Zugriff auf sie zu ermöglichen, wobei die Recheneinheit (3) vorzugsweise über einen USB-Eingang (14) oder über einen Anschluss (18) für einen Feldbus angeschlossen ist.

9. Analysesystem gemäß einem der vorstehendend Ansprüche, wobei die Recheneinheit (3) dazu eingerichtet ist, die gemessenen und aufgenommenen Daten und/oder daraus ermittelte Werte durch ein oder mehrere Diagramme wie Funktionsgraphen, Oszillogramme, Säulendiagramme und/oder Kreisdiagramme zu visualisieren.

## Claims

1. Analysis system (4) for surveying and analysing industrial machines or installations that comprises a measuring instrument (1) and a computation unit, wherein the measuring instrument (1) comprises:
at least one measurement module (10) that is set up to measure at least one first physical variable,
at least one analogue input (11) that is set up to pick up data;
at least one sensor (12) for measuring at least one second physical variable, which is connected to the at least one analogue input (11), wherein the data picked up are measured values that have been captured by the at least one sensor,
and
a programmable logic controller (20) that is set up to collect data measured by the at least one measurement module (10) and, at the same time, data picked up via the at least one analogue input (11), wherein at least one of the first physical variables is an energy consumption, a volume flow and/or a pressure of a machine component,
wherein the computation unit (3) is set up to communicate wirelessly or by wire with the programmable logic controller (20) in the measuring instrument, in order to access measured and picked-up data (22) recorded by the programmable logic controller (20) and to analyse said data,
wherein, in the course of this analysis, a flow of energy or multiple flows of energy between two or more components of the machine or installation are ascertained.

2. Analysis system (4) according to Claim 1, wherein at least one of the second physical variables is an energy consumption, a volume flow and/or a pressure of a machine component.

3. Analysis system (4) according to either of the preceding claims, wherein at least one of the first and/or the second physical variables is an electrical power, a current and/or a voltage of a machine component.

4. Analysis system (4) according to one of the preceding claims, wherein the measuring instrument (1) comprises at least one port (18) for a field bus (21) via which an external machine controller (2) can be connected or via which a further measuring instrument can be connected in parallel.

5. Analysis system (4) according to Claim 4, wherein the programmable logic controller (20) comprises an OPC server (13) that allows the programmable logic controller (20) to communicate with an external machine controller (2) connected via the at least one port (18) or with a further measuring instrument connected in parallel via the at least one port (18).

6. Analysis system (4) according to Claim 5, wherein the OPC server (13) is present as software that is executed by the programmable logic controller (20).

7. Analysis system (4) according to one of the preceding claims, wherein the measuring instrument (1) has two or more trigger functions (17) and/or a display (16) for operating states and/or a USB port (14).

8. Analysis system (4) according to one of the preceding claims that additionally comprises an external machine controller (2) connected via a first field bus (21), said machine controller being set up to record the measured data and the picked-up data (22) and/or to allow the computation unit (3) to access said data, wherein the computation unit (3) is preferably connected via a USB input (14) or via a port (18) for a field bus.

9. Analysis system according to one of the preceding claims, wherein the computation unit (3) is set up to visualise the measured and picked-up data and/or values ascertained therefrom by means of one or more graphs such as function graphs, oscillograms, bar charts and/or pie charts.

## Revendications

1. Système d'analyse (4) destiné à mesurer et à analyser des machines ou des installations industrielles, comprenant un appareil de mesure (1) et une unité de calcul, dans lequel l'appareil de mesure (1) comprend:
au moins module de mesure (10) qui est conçu pour mesurer au moins une première grandeur physique,
au moins une entrée analogique (11) qui est conçue pour acquérir des données ;
au moins un capteur (12) destiné à mesurer au moins une seconde grandeur physique, qui est connecté à l'au moins une entrée analogique (11), dans lequel les données acquises sont des valeurs de mesure qui ont été détectées par l'au moins un capteur,
une unité de commande programmable en mémoire (20) qui est conçue pour recueillir des données mesurées par l'au moins un module de mesure (10) en même temps que des données acquises par l'intermédiaire de l'au moins une entrée analogique (11), dans lequel au moins l'une des premières grandeurs physiques est une consommation d'énergie, un débit volumique et/ou une pression d'un composant de machine,
dans lequel l'unité de calcul (3) est conçue pour communiquer sans fil ou par liaison filaire avec l'unité de commande programmable en mémoire (20) de l'appareil de mesure, pour accéder à des données (22) enregistrées, mesurées et acquises par l'unité de commande programmable en mémoire (20) et pour les analyser,
dans lequel, au cours de cette analyse, on détermine un flux d'énergie ou plusieurs flux d'énergie entre deux composants de la machine ou de l'installation ou plus.

2. Système d'analyse (4) selon la revendication 1, dans lequel au moins l'une des secondes grandeurs physiques est une consommation d'énergie, un débit volumique et/ou une pression d'un composant de machine.

3. Système d'analyse (4) selon l'une quelconque des revendications précédentes, dans lequel au moins l'une de la première et/ou de la seconde grandeur physique est une puissance électrique, un courant et/ou une tension d'un composant de machine.

4. Système d'analyse (4) selon l'une quelconque des revendications précédentes, dans lequel l'appareil de mesure (1) comprend au moins un connecteur (18) destinée à un bus de terrain (21), par l'intermédiaire duquel une unité de commande de machine externe (2) peut être connectée ou par l'intermédiaire duquel un autre appareil de mesure peut être connecté en parallèle.

5. Système d'analyse (4) selon la revendication 4, dans lequel l'unité de commande programmable en mémoire (20) comprend un serveur OPC (13) qui permet une communication entre l'unité de commande programmable en mémoire (20) et une unité de commande de machine externe (2) connectée par l'intermédiaire dudit au moins un connecteur (18) ou un autre appareil de mesure connecté en parallèle par l'intermédiaire dudit au moins un connecteur (18).

6. Système d'analyse (4) selon la revendication 5, dans lequel le serveur OPC (13) se présente sous la forme d'un logiciel qui est exécuté par l'unité de commande programmable en mémoire (20).

7. Système d'analyse (4) selon l'une quelconque des revendications précédentes, dans lequel l'appareil de mesure (1) présente deux fonctions de déclenchement (17) ou plus et/ou un afficheur (16) affichant des états de fonctionnement et/ou un connecteur USB (14).

8. Système d'analyse (4) selon l'une quelconque des revendications précédentes, comprenant en outre une unité de commande de machine externe (2) connectée par l'intermédiaire d'un premier bus de terrain (21), qui est conçue pour enregistrer les données mesurées et les données acquises (22) et/ou permettre à l'unité de calcul (3) d'accéder à celles-ci, dans lequel l'unité de calcul (3) est de préférence connectée par l'intermédiaire d'une entrée USB (14) ou par l'intermédiaire d'un connecteur (18) destiné à un bus de terrain.

9. Système d'analyse selon l'une quelconque des revendications précédentes, dans lequel l'unité de calcul (3) est conçue pour visualiser les données mesurées ou acquises et/ou les valeurs déterminées à partir de celles-ci par l'intermédiaire d'un ou plusieurs diagrammes tels que des graphes fonctionnels, des oscillogrammes, des diagrammes à colonnes et/ou des diagrammes circulaires.
